(19) Europäisches Patentamt
European Patent Office
Office européen des brevets

(11) **EP 1 400 951 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(51) Int Cl.:
***G10L 15/02*** *(2006.01)* ***G10L 15/00*** *(2006.01)*

(21) Anmeldenummer: **03014195.6**

(22) Anmeldetag: **24.06.2003**

(54) **Verfahren zur rechnergestützten Spracherkennung, Spracherkennungssystem und Steuereinrichtung zum Steuern eines technischen Systems und Telekommunikationsgerät**

Method for computerized speech recognition, a speech recognition system and a control system for controlling a technical system and telecommunication system

Méthode informatisée pour la reconnaissance de la parole, système de reconnaissance de parole et un système de contrôle pour un système technique et système de télécommunication

(84) Benannte Vertragsstaaten:
**DE FR GB**

(30) Priorität: **23.09.2002 DE 10244165**

(43) Veröffentlichungstag der Anmeldung:
**24.03.2004 Patentblatt 2004/13**

(73) Patentinhaber: **Infineon Technologies AG
85579 Neubiberg (DE)**

(72) Erfinder:
• **Küstner, Michael
83629 Weyarn (DE)**
• **Sambeth, Ralf
81541 München (DE)**

(74) Vertreter: **Viering, Jentschura & Partner
Postfach 22 14 43
80504 München (DE)**

(56) Entgegenhaltungen:
• **HAEB-UMBACH R ET AL: "Improvements in connected digit recognition using linear discriminant analysis and mixture densities" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, Bd. 4, 27. April 1993 (1993-04-27), Seiten 239-242, XP010110438 ISBN: 0-7803-0946-4**
• **HUBENER K ET AL: "Speech recognition for spontaneously spoken German dialogues" SPOKEN LANGUAGE, 1996. ICSLP 96. PROCEEDINGS., FOURTH INTERNATIONAL CONFERENCE ON PHILADELPHIA, PA, USA 3-6 OCT. 1996, NEW YORK, NY, USA,IEEE, US, 3. Oktober 1996 (1996-10-03), Seiten 212-215, XP010237682 ISBN: 0-7803-3555-4**
• **DOLFING J G A ET AL: "Signal representations for hidden Markov model based online handwriting recognition" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21. April 1997 (1997-04-21), Seiten 3385-3388, XP010225884 ISBN: 0-8186-7919-0**

**Beschreibung**

Die Erfindung, wie sie in den Ansprüchen beschrieben ist, betrifft ein Verfahren zur rechnergestützten Spracherkennung, ein Spracherkennungssystem sowie eine Steuereinrichtung zum Steuern eines technischen Systems mit einem Spracherkennungssystem und ein Telekommunikationsgerät.

Im Rahmen der rechnergestützten Spracherkennung wird ein von einem Benutzer eingesprochenes Sprachsignal im Rahmen der Vorverarbeitung digitalisiert und auf so genannte Merkmalsvektoren, die auch als Featurevektoren bezeichnet werden, abgebildet und für die durchzuführende Spracherkennung gespeichert.

Die Merkmalsvektoren weisen je nach Anwendung eine fest vorgegebene Anzahl von Merkmalsvektor-Komponenten auf, die üblicherweise in dem Merkmalsvektor geordnet sind nach ihrer Bedeutung im Rahmen der Spracherkennung, üblicherweise geordnet nach Merkmalsvektor-Komponenten mit geringer werdendem Informationsgehalt (kleiner werdender statistischer Varianz).

Insbesondere in einer Spracherkennungsanwendung in einem Embedded System ist jedoch die zur Verfügung stehende Rechenleistung und der zur Verfügung stehende Speicherplatz knapp, weshalb es in den derzeit bekannten Spracherkennungsanwendungen insbesondere aufgrund einer sehr hohen Anzahl von Merkmalsvektor-Komponenten, häufig zu Problemen kommt.

In [1] ist ein Verfahren zum Berechnen von Abständen zwischen einem Merkmalsvektor und mehreren Vergleichsvektoren beschrieben. Bei diesem Verfahren wird für die Komponenten des Merkmalsvektors jeweils deren Diskriminierungsfähigkeit ermittelt. Für diejenigen Komponenten des Merkmalsvektors, deren Diskriminierungsfähigkeit schlechter als ein vorgegebener Schwellenwert ist, wird ein erster Teilabstand zu einer Gruppe von Komponenten der Vergleichsvektoren ermittelt. Für diejenigen Komponenten des Merkmalsvektors, deren Diskriminierungsfähigkeit besser als der vorgegebene Schwellenwert ist, werden zweite Teilabstände zu den entsprechenden Komponenten der Vergleichsvektoren bestimmt. Aus dem ersten Teilabstand und den zweiten Teilabständen werden die Abstände von dem Merkmalsvektor zu den mehreren Vergleichsvektoren ermittelt.

Ein weiteres bekanntes sprecherunabhängiges Spracherkennungssystem wird in [3] beschrieben.

Der Erfindung liegt das Problem zu Grunde, eine Möglichkeit zur rechnergestützten Spracherkennung sowie ein Spracherkennungssystem anzugeben, bei der eine verringerte zur Verfügung stehenden Rechenleistung oder ein reduzierter zur Verfügung stehenden Speicherplatz ausreicht.

Das Problem wird durch das Verfahren zur rechnergestützten Spracherkennung, durch das Spracherkennungssystem, durch die Steuereinrichtung sowie durch das Telekommunikationsgerät mit den Merkmalen gemäß den unabhängigen Patentansprüchen gelöst.

Bei einem Verfahren zur rechnergestützten Spracherkennung unter Verwendung von Merkmalsvektoren ist eine, vorzugsweise zu Beginn des Verfahrens, ermittelte Erkennungsraten-Information gespeichert, mit der für die Merkmalsvektoren abhängig von dem Informationsgehalt der Merkmalsvektor-Komponenten angegeben wird, welche Spracherkennungsrate jeweils mit den Merkmalsvektoren mit den jeweils berücksichtigten Merkmalsvektor-Komponenten erzielbar ist.

In einem ersten Schritt wird für eine Spracherkennungsanwendung ermittelt oder bestimmt, welche Spracherkennungsrate für die jeweilige Spracherkennungsanwendung benötigt wird.

Unter Verwendung der gespeicherten Spracherkennungsraten-Information wird von dem Rechner ermittelt, welcher Informationsgehalt der Merkmalsvektor-Komponenten mindestens erforderlich ist, um die bestimmte Spracherkennungsrate zu gewährleisten.

Ferner wird ermittelt, wie viele Merkmalsvektor-Komponenten in dem Spracherkennungssystem für die jeweilige Spracherkennungsanwendung erforderlich sind, um den ermittelten Informationsgehalt bereitzustellen.

Vorzugsweise wird ferner für die jeweilige Spracherkennungsanwendung ein Codebuch erstellt unter Berücksichtigung der zuvor ermittelten Anzahl von Merkmalsvektor-Komponenten in dem Spracherkennungssystem.

Anschließend wird - vorzugsweise unter Verwendung des bestimmten, Spracherkennungsanwendungs-spezifischen Codebuchs - die Spracherkennung ausgeführt wird unter Verwendung von Merkmalsvektoren mit der Anzahl von Merkmalsvektor-Komponenten, die erforderlich sind, um den ermittelten Informationsgehalt bereitzustellen.

Die Spracherkennung, das heißt das Verfahren zum Vergleichen der Merkmalsvektoren, insbesondere somit der Vergleich der Merkmalsvektoren eines eingesprochenen Sprachsignals mit den Merkmalsvektoren von Referenzwörtern, die in einem elektronischen Wörterbuch gespeichert sind, wird ausgeführt unter Verwendung von Merkmalsvektoren mit der Anzahl von Merkmalsvektor-Komponenten, die erforderlich ist, um die zuvor bestimmte Spracherkennungsrate zu gewährleisten.

Ein Spracherkennungssystem weist eine Spracherkennungseinheit auf sowie ein mit der Spracherkennungseinheit gekoppeltes elektronisches Wörterbuch, in dem die im Rahmen der Spracherkennung berücksichtigten Wörter gespeichert sind.

Ferner ist in dem Spracherkennungssystem ein Erkennungsraten-Informations-Speicher vorgesehen, in dem Erkennungsraten-Information gespeichert ist, mit der für die Merkmalsvektoren abhängig von dem Informationsgehalt der Merkmalsvektor-Komponenten angegeben wird, welche Spracherkennungsrate jeweils mit den Merkmalsvektoren mit den jeweils berücksichtigten Merkmalsvektor-Komponenten erzielbar ist. Mittels einer ebenfalls vorgesehenen Erkennungsraten-Informations-Ermittlungseinheit zum Ermitteln der Erkennungsraten-Information wird vor Durchführung der eigentlichen Spracherkennung anhand vorzugsweise eines Trainingsdatensatzes die Erkennungsraten-Information ermittelt. Ferner ist eine Informationsgehalt-Ermittlungseinheit vorgesehen zum Ermitteln des Informationsgehalts für Merkmalsvektor-Komponenten eines Merkmalsvektors in dem Spracherkennungssystem. Ferner ist eine Merkmalsvektor-Komponenten-Auswahleinheit zum Auswählen von Merkmalsvektor-Komponenten, die im Rahmen der Spracherkennung zu berücksichtigen sind, in dem Spracherkennungssystem vorgesehen.

Eine Steuereinrichtung zum Steuern eines technischen Systems weist das oben beschriebene Spracherkennungssystem auf, wobei in dem elektronischen Wörterbuch die zum Steuern des technischen Systems vorgesehenen Steuerbefehle zur, vorzugsweise sprecherunabhängigen, Spracherkennung gespeichert sind.

Anschaulich ist somit erfindungsgemäß erstmals ermöglicht, die tatsächlichen anwendungsspezifischen Anforderungen an die Erkennungsrate im Rahmen der Auswahl von Merkmalsvektor-Komponenten von Merkmalsvektoren zur Spracherkennung flexibel zu berücksichtigen, ohne dass für jede Spracherkennungsanwendung erneut eine Spracherkennungsrate ermittelt werden muss.

Auf diese Weise wird ein optimierter Kompromiss insbesondere hinsichtlich des zur Verfügung stehenden Speicherplatzbedarfs durch anwendungsabhängige Reduktion der Dimension der Merkmalsvektoren, anders ausgedrückt der Anzahl berücksichtigter Merkmalsvektor-Komponenten erreicht. Die Reduktion der Anzahl berücksichtigter Merkmalsvektor-Komponenten im Rahmen der Spracherkennung führt zu einer erheblichen Reduktion der im Rahmen der Spracherkennung selbst benötigten Rechnerleistung.

Aus diesem Grund eignet sich die Erfindung insbesondere für den Einsatz in einem Embedded System.

Ferner wird eine erhebliche Einsparung an benötigter Rechenzeit erreicht, da für eine neue Spracherkennungsanwendung lediglich die Anzahl erforderlicher Merkmalsvektor-Komponenten aus der zuvor lediglich einmal ermittelten Erkennungsraten-Information bestimmt werden braucht und das Codebuch unmittelbar unter Verwendung der Merkmalsvektoren mit der bestimmten erforderlichen Anzahl von Merkmalsvektor-Komponenten ermittelt werden kann.

Bevorzugte Weiterbildungen der Erfindung ergeben sich aus den abhängigen Ansprüchen.

Die im Folgenden beschriebenen Ausgestaltungen der Erfindung betreffen sowohl das Verfahren, das Spracherkennungssystem als auch die Steuereinrichtung.

Für die Spracherkennung selbst wird vorzugsweise ein Spracherkennungsverfahren zur sprecherunabhängigen Spracherkennung, besonders bevorzugt unter Verwendung von Hidden Markov Modellen durchgeführt.

Alternativ können zur Spracherkennung, insbesondere zur sprecherunabhängigen Spracherkennung statistische Klassifikatoren, beispielsweise unter Verwendung künstlicher neuronaler Netze, eingesetzt werden.

Allgemein kann jedoch erfindungsgemäß jedes beliebige Verfahren zur Spracherkennung eingesetzt werden.

Gemäß einer anderen Ausgestaltung der Erfindung ist es vorgesehen, dass die Merkmalsvektor-Komponenten mit relativ hohem Informationsgehalt unter den Merkmalsvektor-Komponenten des jeweiligen Merkmalsvektors ausgewählt werden und im Rahmen der Spracherkennung verwendet werden.

Durch diese Ausgestaltung der Erfindung wird gewährleistet, dass tatsächlich diejenigen Merkmalsvektor-Komponenten nicht berücksichtigt werden, die den geringsten Informationsgehalt innerhalb aller Merkmalsvektor-Komponenten aufweisen, womit gewährleistet wird, dass die verloren gegangene Information im Rahmen der Spracherkennung, die entsteht aufgrund der Nicht-Berücksichtigung einer Merkmalsvektor-Komponenten, minimiert ist.

Als Steuereinrichtung zum Steuern eines technischen Systems eignen sich beispielsweise eine Steuereinrichtung zum Steuern eines Telekommunikationsgeräts, beispielsweise eines Telefongeräts, eines Telefaxgeräts, eines PDAs, eines Notebooks, etc., oder zum Steuern eines Endgeräts, in dem mindestens zwei der oben beschriebenen Geräte-Funktionalitäten in einem gemeinsamen Gerät integriert sind. Insbesondere diese mit einem klar definierten und begrenzten Wortschatz zu steuernden Geräte können mittels eines Sprachdialogs gesteuert werden, der relativ übersichtlich und somit selbst mittels eines Embedded Systems kostengünstig realisierbar ist.

Die anwendungsangepasste erhebliche Reduktion der Dimension verarbeiteter Merkmalsvektoren führt zu einer erheblichen Zeiteinsparung im Rahmen der Entwicklung eines Spracherkennungssystems, insbesondere wird das verwendete Codebuch erheblich reduziert, womit der Speicherplatzbedarf ebenfalls in erheblichem Maße reduziert wird.

Ein Ausführungsbeispiel der Erfindung ist in den Figuren dargestellt und wird im Folgenden näher erläutert.

Es zeigen

Figur 1     ein Blockdiagramm eines Spracherkennungssystems gemäß einem Ausführungsbeispiel der Erfindung;

Figur 2     eine Skizze des Speichers des Rechners aus Figur 1 im Detail;

Figur 3     ein Blockdiagramm, in dem die einzelnen Verfahrensschritte zum Bestimmen einer Erkennungsraten-Information gemäß einem Ausführungsbeispiel der Erfindung dargestellt sind;

Figur 4      ein Ablaufdiagramm, in dem die einzelnen Verfahrensschritte zum Bestimmen einer Erkennungsraten-Information gemäß einem Ausführungsbeispiel der Erfindung dargestellt sind;

Figur 5      eine Skizze einer Erkennungsraten-Information gemäß einem Ausführungsbeispiel der Erfindung;

Figur 6      ein Ablaufdiagramm, in dem die einzelnen Verfahrensschritte des Verfahrens zur Spracherkennung gemäß einem Ausführungsbeispiel der Erfindung dargestellt sind.

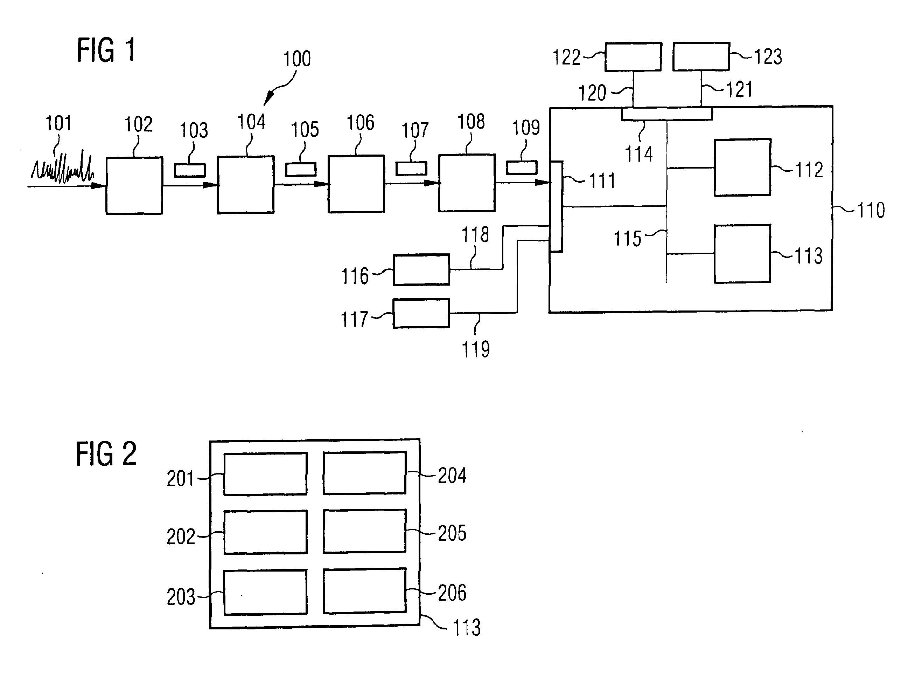

**Fig.1** zeigt ein Spracherkennungssystem 100 gemäß einem Ausführungsbeispiel der Erfindung.

Das Spracherkennungssystem 100 arbeitet je nach Betriebsmodus in einem ersten Betriebsmodus als Spracherkennungseinrichtung, wobei in dem Spracherkennungsmodus eine eingesprochene Äußerung 101, eingesprochen von einem Benutzer (nicht dargestellt) des Spracherkennungssystems 100, von der Spracherkennungseinrichtung erkannt wird. Die Spracherkennung erfolgt unter Verwendung eines Verfahrens zur sprecherunabhängigen Spracherkennung.

In einem zweiten Betriebsmodus, im Weiteren auch bezeichnet als Trainingsmodus, wird unter Verwendung einer eingesprochenen Äußerung 101, wie im Weiteren näher erläutert wird, das Spracherkennungssystem 100 trainiert, gemäß diesem Ausführungsbeispiel bedeutet dies, dass einzelne Hidden Markov Modelle für eine Äußerung mittels der eingesprochenen Äußerung 101 trainiert werden.

In beiden Betriebsmodi wird das von dem Benutzer eingesprochene Sprachsignal 101 einem Mikrofon 102 zugeführt und als aufgenommenes elektrisches Analogsignal 103 einer Vorverstärkung mittels einer Vorverstärkungseinheit 104 unterzogen und als verstärktes Analogsignal 105 einem Analog/Digitalwandler 106 zugeführt, dort in ein digitales Signal 107 umgewandelt und als digitales Signal 107 einer Merkmalsextraktionseinheit 108 zugeführt, welche das digitale Signal 107 einer Spektraltransformation unterzieht und zu dem digitalen Signal 107 zu einer Äußerung eine Folge von Merkmalsvektoren 109 bildet, welche das digitale Signal 107 repräsentieren.

Jeder Merkmalsvektor 109 weist eine vorgegebene Anzahl von Merkmalsvektor-Komponenten auf.

Gemäß diesem Ausführungsbeispiel weisen die Merkmalsvektoren jeweils 78 Merkmalsvektor-Komponenten auf.

Die Merkmalsvektoren 109 werden einem Rechner 110 zugeführt.

Es ist in diesem Zusammenhang anzumerken, dass das Mikrofon 102, die Vorverstärkungseinheit 104, insbesondere die Verstärkungseinheit, und der Analog-/Digitalwandler 106 sowie die Merkmalsextraktionseinheit 108 als separate Einheiten oder auch als in dem Rechner 110 integrierte Einheiten realisiert sein können.

Gemäß diesem Ausführungsbeispiel der Erfindung ist es vorgesehen, dass die Merkmalsvektoren 109 dem Rechner 110 über dessen Eingangsschnittstelle 111 zugeführt werden.

Der Rechner 110 weist ferner einen Mikroprozessor 112, einen Speicher 113 sowie eine Ausgangsschnittstelle 114 auf, welche alle miteinander mittels eines Computerbus 115 gekoppelt sind.

Mittels des Mikroprozessors 112 werden die im Folgenden beschriebenen Verfahrensschritte, insbesondere die Verfahren zum Ermitteln der im Folgenden erläuterten Erkennungsraten-Information sowie die Verfahren zur Spracherkennung durchgeführt.

In einem im Folgenden näher erläuterten elektronischen Wörterbuch, welcher im Speicher 113 gespeichert ist, sind die Einträge in Form trainierter Hidden Markov Modelle enthalten, die im Rahmen der Spracherkennung als Referenzwörter, die überhaupt nur von dem Spracherkennungsalgorithmus überhaupt erkannt werden können, enthalten sind.

Alternativ kann zusätzlich ein digitaler Signalprozessor vorgesehen sein, der die jeweils eingesetzten Spracherkennungsalgorithmen implementiert hat und einen darauf spezialisierten Mikrocontroller aufweisen kann.

Ferner ist der Rechner 110 mittels der Eingangsschnittstelle 113 mit einer Tastatur 116 sowie einer Computermaus 117 über elektrische Leitungen 118, 119 oder eine Funkverbindung, beispielsweise eine Infrarot-Verbindung oder eine Bluetooth-Verbindung gekoppelt.

Über zusätzliche Kabel oder Funkverbindungen, beispielsweise mittels einer Infrarot-Verbindung oder einer Bluetooth-Verbindung 120, 121 ist der Rechner 110 mittels der Ausgangsschnittstelle 114 mit einem Lautsprecher 122 sowie einem Aktor 123 gekoppelt.

Der Aktor 123 repräsentiert in Fig.1 allgemein jeden möglichen Aktor im Rahmen der Steuerung eines technischen Systems, beispielsweise realisiert in Form eines Hardwareschalters oder in Form eines Computerprogramms für den Fall, dass beispielsweise ein Telekommunikationsgerät oder ein anderes technisches System, beispielsweise ein Autoradio, eine Stereoanlage, ein Videorekorder, ein Fernseher, der Rechner 110 selbst oder irgendeine andere technische Anlage gesteuert werden soll.

Gemäß dem Ausführungsbeispiel der Erfindung weist die Merkmalsextraktionseinheit 108 eine Filterbank mit einer Mehrzahl von Bandpässen auf, welche die Energie des eingegebenen Sprachsignals 103 in einzelnen Frequenzbändern messen. Mittels der Filterbank werden so genannte Kurzzeitspektren gebildet, indem die Ausgangssignale der Bandpässe gleichgerichtet, geglättet und in kurzen Abständen abgetastet werden, gemäß dem Ausführungsbeispiel alle 10 msec, alternativ alle 15 msec.

Die mittels der Merkmalsextraktionseinheit 108 gebildeten Cepstrum-Koeffizienten, die 13 Koeffizienten der Merkmalsvektoren 109 bilden, werden als Merkmalsvektor-Komponenten von zwei aufeinander folgenden Zeitfenstern der Größe von 10 msec oder von 15 msec in dem Merkmalsvektor 109 gespeichert. Ferner sind als Merkmalsvektor-Komponenten in dem Merkmalsvektor 109 jeweils die zeitliche erste Ableitung sowie die zeitliche zweite Ableitung der Cepstrum-Koeffizienten in dem Merkmalsvektor 109 als Super-Merkmalsvektor zusammengefasst und werden dem Rechner 110 zugeführt.

In dem Rechner 110 ist in Form eines Computerprogramms eine Spracherkennungseinheit realisiert und in einem ersten Speicherteilbereich 201 (vgl. **Fig.2**) in dem Speicher 113 gespeichert, welche Spracherkennungseinheit auf dem Prinzip der Hidden Markov Modelle basiert. Somit erfolgt mittels des Computerprogramms eine sprecherunabhängige Spracherkennung.

Zu Beginn des Verfahrens werden zwei unterschiedliche Datensätze mit von einem oder mehreren Benutzern eingesprochenen Sprachäußerungen gebildet.

Ein Trainingsdatensatz, gespeichert in einem zweiten Speicherteilbereich 202 des Speichers 113 weist diejenigen Sprachäußerungen, in Form von für die jeweiligen Sprachäußerungen gebildeten Merkmalsvektoren, auf, die zum im Folgenden näher erläuterten Trainieren der Hidden Markov Modelle, welche zur Spracherkennung eingesetzt werden, verwendet werden.

In einem dritten Speicherteilbereich 203 ist ein Testdatensatz gespeichert, das heißt die Sprachäußerungen, die verwendet werden zum Testen der trainierten Spracherkennungseinheit, anders ausgedrückt zum Testen der trainierten Hidden Markov Modelle, die in einem vierten Speicherteilbereich 204 gespeichert sind.

Mittels des Testdatensatzes wird, wie im Folgenden näher erläutert wird, eine Erkennungsraten-Information ermittelt, welche in einem fünften Speicherteilbereich 205 gespeichert sind.

In einem sechsten Speicherteilbereich 206 ist ferner eine im Weiteren näher erläuterte Tabelle gespeichert, in der für eine oder mehrere Anwendungen des Spracherkennungssystems eine Angabe darüber gespeichert ist, welche Erkennungsrate für die jeweilige Anwendung benötigt wird.

Es ist in diesem Zusammenhang darauf hinzuweisen, dass die einzelnen Elemente in unterschiedlichen Speicherbereichen desselben Speichers 113 gespeichert sein können, jedoch auch in unterschiedlichen, vorzugsweise an die jeweiligen Anforderungen der gespeicherten Elemente angepassten Speichern.

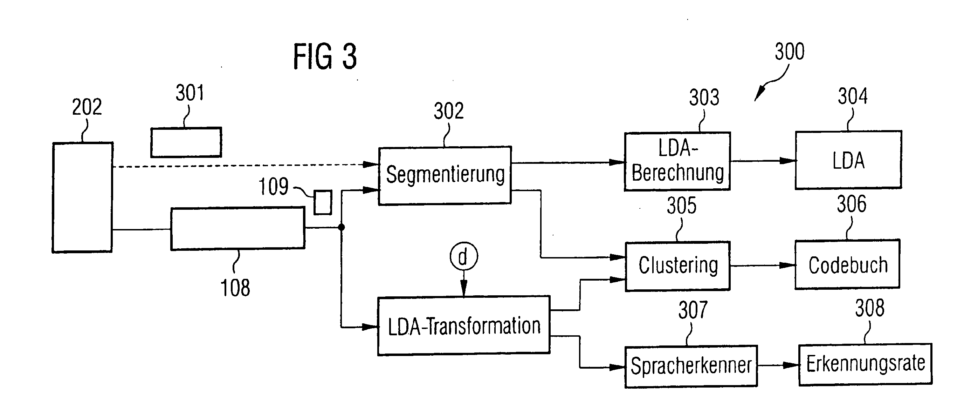

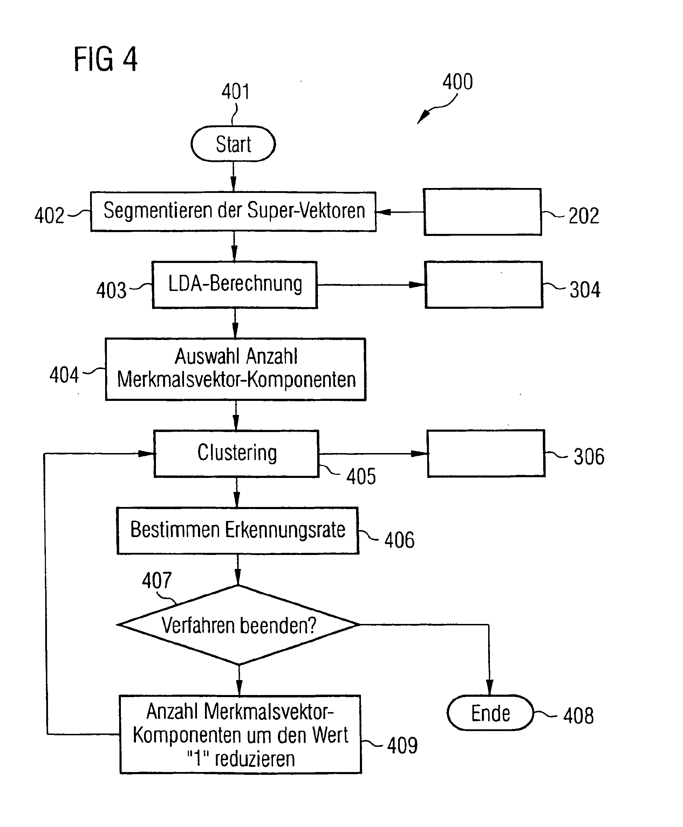

**Fig.3** und **Fig.4** zeigen in einem Blockdiagramm 300 (vgl. Fig.3) bzw. in einem Ablaufdiagramm (vgl. Fig.4) die einzelnen von dem Rechner 110 durchgeführten Verfahrensschritte des Verfahrens zum Ermitteln der in dem fünften Speicherteilbereich 205 gespeicherten Erkennungsraten-Information.

Nach Starten des Verfahrens (Schritt 401) werden in einem Trainingsschritt die einzelnen Hidden Markov Modelle unter Verwendung des in dem zweiten Teilspeicherbereich 202 gespeicherten Trainingsdatensatzes trainiert.

Das Training der Hidden Markov Modelle erfolgt gemäß diesem Ausführungsbeispiel in drei Phasen:

- einer erste Phase (Schritt 402), in der die in der Trainings-Datenbank enthaltenen Sprachsignale 301 segmentiert werden mittels einer Segmentierungseinheit 302,
- einer zweiten Phase (Schritt 403), in der die LDA-Matrix (lineare Diskriminanzanalyse-Matrix) berechnet wird sowie
- einer dritten Phase (Schritt 405), in der das Codebuch, das heißt die HMM-Prototypen-Merkmalsvektoren für jeweils eine in einem Auswahlschritt (Schritt 404) ausgewählte Anzahl von Merkmalsvektor-Komponenten berechnet werden.

Die Gesamtheit dieser drei Phasen wird im Weiteren als das Training der Hidden Markov Modelle bezeichnet (HMM-Training).

Das HMM-Training wird unter Verwendung des DSPs 123 sowie unter Verwendung von vorgegebenen Trainingskripts, anschaulich von geeignet eingerichteten Computerprogrammen, durchgeführt.

Gemäß diesem Ausführungsbeispiel wird jede gebildete lautsprachliche Einheit, das heißt jedes Phonem, in drei aufeinander folgende Phonemsegmente aufgeteilt, entsprechend einer Initial-Phase (erstes Phonemsegment), einer zentralen Phase (zweites Phonemsegment) und einer Endphase (drittes Phonemsegment) eines Lauts, das heißt eines Phonems.

Anders ausgedrückt wird jeder Laut in einem Lautmodell mit drei Zuständen, das heißt mit einem Drei-Zustands-HMM modelliert.

Während der Spracherkennung werden die drei Phonemsegmente in einer Bakis-Topologie oder allgemein einer Links-Rechts-Topologie aneinander gereiht und auf die Konkatenation dieser drei aneinander gereihten Segmente wird die Berechnung im Rahmen der sprecherunabhängigen Spracherkennung durchgeführt.

Wie im Weiteren noch näher erläutert wird, wird in dem Spracherkennungsmodus ein Viterbi-Algorithmus zum Dekodieren der Merkmalsvektoren, welche aus dem eingegebenen Sprachsignal 101 gebildet werden, durchgeführt.

Nach erfolgter Segmentierung wird die LDA-Matrix 304 (Schritt 403) mittels einer LDA-Matrix-Berechnungseinheit 303 ermittelt.

Die LDA-Matrix 304 dient zur Transformation eines jeweiligen Super-Merkmalsvektors $\underline{y}$ auf einen Merkmalsvektor $\underline{x}$ gemäß folgender Vorschrift:

$$\underline{x} = \underline{A}^{T} \cdot \left(\underline{y} - \underline{\bar{y}}\right), \qquad (1)$$

wobei mit

- $\underline{x}$ ein Merkmalsvektor,
- $\underline{A}$ eine LDA-Matrix,
- $\underline{y}$ ein Super-Merkmalsvektor,
- $\underline{\bar{y}}$ ein globaler Verschiebungsvektor

bezeichnet wird.

Die LDA-Matrix $\underline{A}$ wird derart bestimmt, dass

- die Komponenten des Merkmalsvektors $\underline{x}$ im statistischen Durchschnitt voneinander im Wesentlichen unkorreliert sind,
- die statistischen Varianzen innerhalb einer Segmentklasse im statistischen Durchschnitt normalisiert sind,
- die Zentren der Segmentklassen im statistischen Durchschnitt einen maximalen Abstand voneinander aufweisen und
- die Dimension der Merkmalsvektoren $\underline{x}$ möglichst, vorzugsweise Spracherkennungsanwendungs-abhängig, reduziert wird.

Im Folgenden wird das Verfahren zum Bestimmen der LDA-Matrix $\underline{A}$ gemäß diesen Ausführungsbeispielen erläutert.

Es ist jedoch anzumerken, dass alternativ alle bekannten Verfahren zum Bestimmen einer LDA-Matrix $\underline{A}$ ohne Einschränkung eingesetzt werden kann.

Es wird angenommen, dass J Segmentklassen existieren, wobei jede Segmentklasse j einen Satz $D_y$-dimensionaler Super-Merkmalsvektoren $\underline{y}$ enthält, das heißt, dass gilt:

$$\text{Klasse } j = \left\{ \underline{y}_j^1, \underline{y}_j^2, \ldots, \underline{y}_j^{N_j} \right\}, \qquad (2)$$

wobei mit $N_j$ die Anzahl der in der Klasse j sich befindenden Super-Merkmalsvektoren $\underline{y}_j$ bezeichnet wird.

Mit

$$N = \sum_{j=1}^{J} N_j \qquad (3)$$

wird die Gesamtzahl der Super-Merkmalsvektoren $\underline{y}$ bezeichnet.

Es ist anzumerken, dass die Super-Merkmalsvektoren $\underline{y}_j^k$ unter Verwendung der oben beschriebenen Segmentierung der Sprachsignal-Datenbank ermittelt worden sind.

Gemäß diesem Ausführungsbeispiel weist jeder SuperMerkmalsvektor $\underline{y}_j^k$ eine Dimension $D_y$ von

$$D_y = 78 \quad \left(= 2 \cdot 3 \cdot 13\right)$$

auf, wobei 13 MFCC-Koeffizienten (Cepstrums-Koeffizienten) in dem Super-Merkmalsvektor $\underline{y}_{\dot{j}}^{k}$ enthalten sind, sowie deren jeweilige zeitliche erste Ableitung und deren jeweilige zeitliche zweite Ableitung (dies begründet obigen Faktor 3).

Ferner sind in jedem Super-Merkmalsvektor $\underline{y}_{\dot{j}}^{k}$ jeweils die Komponenten zweier zeitlich unmittelbar aufeinanderfolgender Zeitfenster im Rahmen der Kurzzeitanalyse enthalten (dies begründet obigen Faktor 2).

Es ist in diesem Zusammenhang anzumerken, dass grundsätzlich eine beliebige, an die jeweilige Anwendung angepasste Zahl von Vektorkomponenten in dem Super-Merkmalsvektor $\underline{y}_{\dot{j}}^{k}$ enthalten sein kann, beispielsweise bis zu 20 Cepstrums-Koeffizienten und deren zugehörigen zeitlichen erste Ableitungen und zweite Ableitungen.

Der statistische Mittelwert oder anders ausgedrückt das Zentrum der Klasse j ergibt sich gemäß folgender Vorschrift:

$$\overline{\underline{y}}_{j} = \frac{1}{N_j} \cdot \sum_{i=1}^{N_j} \underline{y}_{j}^{i} \cdot \qquad (4)$$

Die Kovarianzmatrix $\underline{\Sigma}_j$ der Klasse j ergibt sich gemäß folgender Vorschrift:

$$\underline{\Sigma}_{j} = \frac{1}{N_j} \cdot \sum_{i=1}^{N_j} \left( \underline{y}_{j}^{i} - \overline{\underline{y}}_{j} \right) \cdot \left( \underline{y}_{j}^{i} - \overline{\underline{y}}_{j} \right)^{T} \cdot \qquad (5)$$

Die Durchschnitts-Intra-Streumatrix $\underline{S}_w$ ist definiert als:

$$\underline{S}_{w} = \sum_{j=1}^{J} p(j) \cdot \underline{\Sigma}_{j} , \qquad (6)$$

mit

$$p(j) = \frac{N_j}{N} , \qquad (7)$$

wobei p(j) als Gewichtungsfaktor der Klasse j bezeichnet wird.

In analoger Weise ist die Durchschnitts-Inter-Streumatrix $\underline{S}_b$ definiert als:

$$\underline{S}_{b} = \sum_{j=1}^{J} p(j) \cdot \left( \overline{\underline{y}}_{j} - \overline{\underline{y}} \right) \cdot \left( \overline{\underline{y}}_{j} - \overline{\underline{y}} \right)^{T} , \qquad (8)$$

mit

$$\overline{y} = \sum_{j=1}^{J} p(j) \cdot \overline{y}_j \qquad\qquad (9)$$

als dem Durchschnitts-Super-Merkmalsvektor über alle Klassen.

Die LDA-Matrix $\underline{A}$ wird zerlegt gemäß folgender Vorschrift:

$$\underline{A} = \underline{U} \cdot \underline{W} \cdot \underline{V}, \qquad\qquad (10)$$

wobei mit

- $\underline{U}$ eine erste Transformationsmatrix,
- $\underline{W}$ eine zweite Transformationsmatrix und
- $\underline{V}$ eine dritte Transformationsmatrix

bezeichnet wird.

Die erste Transformationsmatrix $\underline{U}$ wird verwendet, um die Durchschnitts-Intra-Streumatrix $\underline{S}_w$ zu diagonalisieren und wird ermittelt, indem die positiv definite und symmetrische Durchschnitts-Intra-Streumatrix $\underline{S}_w$ in ihren Eigenvektorraum transformiert wird. In ihrem Eigenvektorraum ist die Durchschnitts-Intra-Streumatrix $\underline{S}_w$ eine Diagonal-Matrix, deren Komponenten positiv und größer oder gleich null sind. Die Komponenten, deren Werte größer null sind, entsprechen der Durchschnitts-Varianz in der jeweiligen durch die entsprechende Vektorkomponente definierten Dimension.

Die zweite Transformationsmatrix W wird zum Normalisieren der Durchschnitts-Varianzen verwendet und wird ermittelt gemäß folgender Vorschrift:

$$\underline{W} = \left(\underline{U}^{T} \cdot \underline{S}_{w} \cdot \underline{U}\right)^{-\frac{1}{2}}. \qquad\qquad (11)$$

Die Transformation $\underline{U} \cdot \underline{W}$ wird auch als Weißung bezeichnet.

Mit

$$\underline{B} = \underline{U} \cdot \underline{W} \qquad\qquad (12)$$

ergibt sich für die Matrix $\underline{B}^{T} \cdot \underline{S}_w \cdot \underline{B}$ die Einheitsmatrix, welche bei jeder beliebigen orthonormalen Lineartransformation unverändert bleibt.

Um die Durchschnitts-Inter-Streumatrix $\underline{S}_b$ zu diagonalisieren wird die dritte Transformationsmatrix $\underline{V}$, die gebildet wird gemäß folgender Vorschrift:

$$\underline{V} = \underline{B}^{T} \cdot \underline{S}_b \cdot \underline{B}, \qquad\qquad (13)$$

wobei $\underline{B}^{T} \cdot \underline{S}_b \cdot \underline{B}$ ebenfalls eine positiv definite und symmetrische Matrix darstellt, in ihren Eigenvektorraum transformiert wird.

In dem Transformationsraum

$$\underline{x} = \underline{A}^{T} \cdot \left(\underline{y} - \overline{y}\right) \qquad\qquad (14)$$

ergeben sich somit folgende Matrizen:

Eine diagonalisierte Durchschnitts-Intra-Streumatrix $\underline{S}_w$:

$$\underline{S}_w = \mathrm{diag}(\underline{1})_{d=1\ldots D_y} \qquad\qquad (15)$$

und eine diagonalisierte Durchschnitts-Inter-Streumatrix $\underline{S}_b$:

$$\underline{S}_b = \mathrm{diag}\left(\sigma_d^2\right)_{d=1\ldots D_y}, \qquad\qquad (16)$$

wobei mit $\mathrm{diag}(c_d)_{d=1\ldots D_y}$ eine $D_y \times D_y$ Diagonalmatrix mit den Komponenten $c_d$ in der Zeile/Spalte d und sonst mit Komponenten mit dem Wert Null, bezeichnet wird.

Die Werte $\sigma_d^2$ sind die Eigenwerte der Durchschnitts-Inter-Streumatrix $\underline{S}_b$ und stellen ein Maß für die so genannte Pseudoentropie der Merkmalsvektor-Komponenten dar, welche im Folgenden auch als Informationsgehalt der Merkmalsvektor-Komponenten bezeichnet wird. Es ist anzumerken, dass die Spur jeder Matrix invariant ist bezüglich irgendeiner Orthogonal transformation, womit sich ergibt, dass die Summe

$$\sigma^2 = \sum_{d=1}^{D_y} \sigma_d^2 \qquad\qquad (17)$$

die Gesamt-Durchschnitts-Varianz des Durchschnitts-Vektors $\underline{x}_j$ der J Klassen darstellt.

Es ergibt sich somit eine ermittelte Anhängigkeit der Pseudoentropie der Merkmalsvektoren von den jeweils in dem Merkmalsvektor enthaltenen bzw. berücksichtigten Merkmalsvektor-Komponenten.

Gemäß diesem Ausführungsbeispiel wird anschließend eine Dimensionsreduktion vorgenommen, indem die $\sigma_d^2$--Werte in in ihrer Größe abfallender Reihenfolge sortiert werden und die $\sigma_d^2$--Werte weggelassen werden, das heißt unberücksichtigt bleiben, die kleiner sind als ein vorgegebener Schwellwert.

Der vorgegebene Schwellwert kann ferner kumulativ definiert sein.

Dann kann die LDA-Matrix $\underline{A}$ angepasst werden, indem die Zeilen entsprechend den Eigenwerten $\sigma_d^2$ sortiert werden und die Zeilen weggelassen werden, die zu den ausreichend "kleinen" Varianzen gehören und damit nur einen geringen Informationsgehalt (geringe Pseudoentropie) aufweisen.

Gemäß diesem Ausführungsbeispiel werden die Komponenten mit den 24 größten Eigenwerten $\sigma_d^2$ verwendet, anders ausgedrückt $D_x = 24$.

Die vier oben beschriebenen Teilschritte zum Ermitteln der LDA-Matrix $\underline{A}$ 304 (Schritt 403) sind in folgender Tabelle zusammengefasst:

| Nummer Verfahrensschritt | Ziel | Verfahren |
|---|---|---|
| 1 | Dekorrelieren der Merkmalsvektorkomponenten | Diagonalisieren der Durchschnitts-Intra-Klassen-Kovarianzmatrix $\underline{S}_w$ |
| 2 | Normalisieren der statistischen Varianzen innerhalb einer Klasse | Bestimmen der inversen Quadratwurzel der transformierten Durchschnitts-Intra-Klassen-Kovarianzmatrix $\underline{U}^T \cdot \underline{S}_w \cdot \underline{U}$ |
| 3 | Maximieren der Klassenzentren | Diagonalisieren der transformierten Durchschnitts-Inter-Klassen-Kovarianzmatrix $\underline{B}^T \cdot \underline{S}_b \cdot \underline{B}$ |

(fortgesetzt)

| Nummer Verfahrensschritt | Ziel | Verfahren |
|---|---|---|
| 4 | Reduzieren der Dimensionen der Merkmalsvektoren | Auswählen der Zeilen der Matrix A mit den 24 größten Eigenwerten von $\underline{A}^T \cdot \underline{S}_b \cdot \underline{A}$ |

Das letzte Verfahren zum Teil-Verfahren im Rahmen des Trainings der Hidden Markov Modelle ist das Clustern der Merkmalsvektoren (Schritt 405), welches mittels einer Clustereinheit 305 durchgeführt wird und welches als Ergebnis ein jeweiliges Codebuch 306 hat, jeweils spezifisch für einen Trainingsdatensatz mit einer vorgegebenen Anzahl von Merkmalsvektor-Komponenten.

Die Gesamtheit der Repräsentanten der Segmentklassen wird als Codebuch bezeichnet und die Repräsentanten selbst werden auch als Prototypen der Phonemsegmentklasse bezeichnet.

Die Prototypen, im Weiteren auch als Prototyp-Merkmalsvektoren bezeichnet, werden gemäß dem in [1] beschriebenen Baum-Welch-Training ermittelt.

Somit sind die Basiseinträge des elektronischen Wörterbuches, das heißt die Basiseinträge zur sprecherunabhängigen Spracherkennung erstellt und gespeichert und die entsprechenden Hidden Markov Modelle trainiert.

Somit existiert für jeden Basiseintrag jeweils ein Hidden Markov Modell, womit das Codebuch 306 für den Trainingsdatensatz mit der ausgewählten Anzahl von Merkmalsvektor-Komponenten in den Merkmalsvektoren in dem Trainingsdatensatz.

Nach erfolgtem Training der Hidden Markov Modelle liegen nunmehr die trainierten Hidden Markov Modelle in dem vierten Speicherteilbereich 204 vor.

In einem anschließenden Verfahrensschritt (Schritt 406) wird für die in dem Testdatensatz, welcher in dem dritten Teilspeicherbereich 203 gespeichert ist, die Erkennungsrate für die jeweiligen Merkmalsvektoren der aktuellen Dimension, das heißt für die Merkmalsvektoren mit der jeweils aktuellen Anzahl von Merkmalsvektor-Komponenten, ermittelt.

Dies erfolgt gemäß diesem Ausführungsbeispiel dadurch, dass für alle Sprachäußerungen, das heißt für alle Folgen von Merkmalsvektoren in dem Testdatensatz eine Spracherkennung mittels der trainierten Hidden Markov Modelle, anders ausgedrückt mittels einer Spracherkennungseinheit 307, durchgeführt wird und die Spracherkennungsergebnisse mit den Soll-Ergebnissen des Testdatensatzes verglichen werden.

Die ermittelte Erkennungsrate 308 ergibt sich aus dem Verhältnis der Anzahl korrekter Erkennungsergebnisse, anders ausgedrückt aus der Anzahl von Übereinstimmungen zwischen dem Spracherkennungsergebnis und dem Soll-Ergebnis, welches in dem Testdatensatz angegeben ist, und der insgesamt zur Spracherkennung dargestellten Testdatensätze.

In einem nachfolgenden Schritt (Schritt 304) wird die ermittelte Erkennungsrate gemeinsam mit der Angabe, wie viele Merkmalsvektor-Komponenten zur Bestimmung der Erkennungsrate 308 für die Merkmalsvektoren des Testdatensatzes 203 verwendet worden sind, gespeichert.

Anschließend wird in einem Prüfschritt 407 überprüft, ob das Verfahren beendet werden soll.

Ist dies der Fall, so wird das Verfahren beendet (Schritt 408).

Soll das Verfahren noch nicht beendet werden, so wird die Anzahl der Merkmalsvektor-Komponenten der Merkmalsvektoren 109, die im Rahmen der Ermittlung der Erkennungsrate aus dem Testdatensatz verwendet werden, um einen vorgegebenen Wert, vorzugsweise um den Wert "1", das heißt um eine Merkmalsvektor-Komponente reduziert (Schritt 409).

Anschließend werden die Schritte des Clusterns (Schritt 405) und somit des Erstellens des jeweiligen Codebuchs 306 und des Bestimmens der Spracherkennungsrate (Schritt 406) erneut durchgeführt, nunmehr jedoch für Merkmalsvektoren des Testdatensatzes mit jeweils um eine Merkmalsvektor-Komponente reduziertem Merkmalsvektoren.

Anders ausgedrückt bedeutet dies, dass bei 78 Merkmalsvektor-Komponenten in einem üblichen Merkmalsvektor gemäß diesem Ausführungsbeispiel der Erfindung in der zweiten Iteration die Erkennungsrate für einen Merkmalsvektor mit 77 Merkmalsvektor-Komponenten durchgeführt wird, in der dritten Iteration mit 76 Merkmalsvektor-Komponenten, usw.

Gemäß einer alternativen Ausgestaltung der Erfindung ist es vorgesehen, unmittelbar nicht mit allen Merkmalsvektor-Komponenten des Super-Merkmalsvektors (d.h. nicht mit allen 78 Merkmalsvektor-Komponenten), zu beginnen, sondern schon zu Beginn eine um einen anwendungsabhängigen Wert reduzierte Anzahl von Merkmalsvektor-Komponenten.

Ferner kann in jeder Iteration die Anzahl von Merkmalsvektor-Komponenten um mehr als um den Wert "1" reduziert werden.

Somit liegen als Ergebnis diese oben beschriebenen Verfahrens einerseits eine Pseudoentropie-Abbildung und andererseits eine Erkennungsraten-Abbildung vor.

Mit der Pseudoentropie-Abbildung wird eine Abhängigkeit der Pseudoentropie der Merkmalsvektoren von den berücksichtigten Merkmalsvektor-Komponenten angegeben, also eine Abhängigkeit des Informationsgehalts, auch als Informationsmaß bezeichnet, von den berücksichtigten Merkmalsvektor-Komponenten.

Mit der Erkennungsraten-Abbildung wird eine Abhängigkeit der Spracherkennungsrate der Merkmalsvektoren von den berücksichtigten Merkmalsvektor-Komponenten angegeben.

Aus der Pseudoentropie-Abbildung und der Erkennungsraten-Abbildung wird die Erkennungsraten-Information gebildet, indem eine Abhängigkeit der Spracherkennungsrate von der Pseudoentropie ermittelt wird unter Verwendung der jeweiligen berücksichtigten Merkmalsvektor-Komponenten. Es ist anzumerken, dass die Erkennungsraten-Information nunmehr unabhängig ist von der Anzahl der berücksichtigten Merkmalsvektor-Komponenten.

Die Erkennungsraten-Information wird in dem fünften Teilspeicherbereich 205 gespeichert.

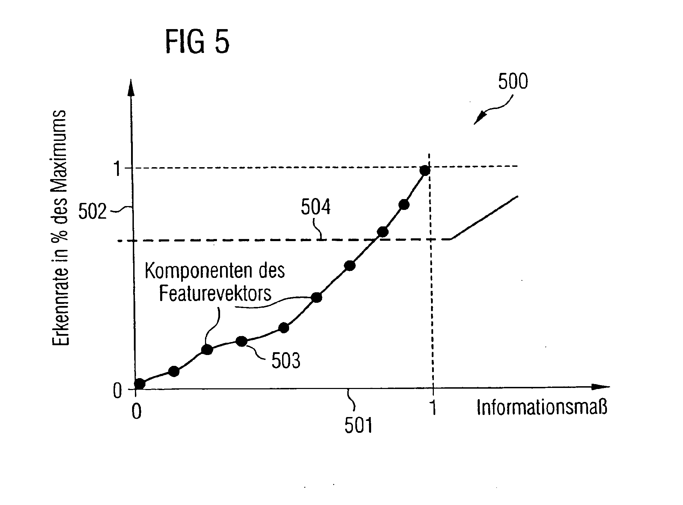

Ergebnis dieses Verfahrens ist somit die in **Fig.5** in einem Funktionsdiagramm dargestellte Erkennungsraten-Information 500, die über einer ersten Achse, auf der die ermittelte Pseudoentropie 501 aufgetragen ist, die erreichte Erkennungsrate 502 in Form von Daten-Tupeln 503 angibt.

Die Erkennungsraten-Information 500 stellt somit den Zusammenhang dar zwischen der Pseudoentropie und der mittels des Spracherkennungssystems erzielbaren Erkennungsrate.

Es ist in diesem Zusammenhang darauf hinzuweisen, dass die Erkennungsraten-Information 500 nur einmal für jedes Spracherkennungssystem, das heißt für jeden trainierten Satz von Hidden Markov Modellen durchgeführt werden muss.

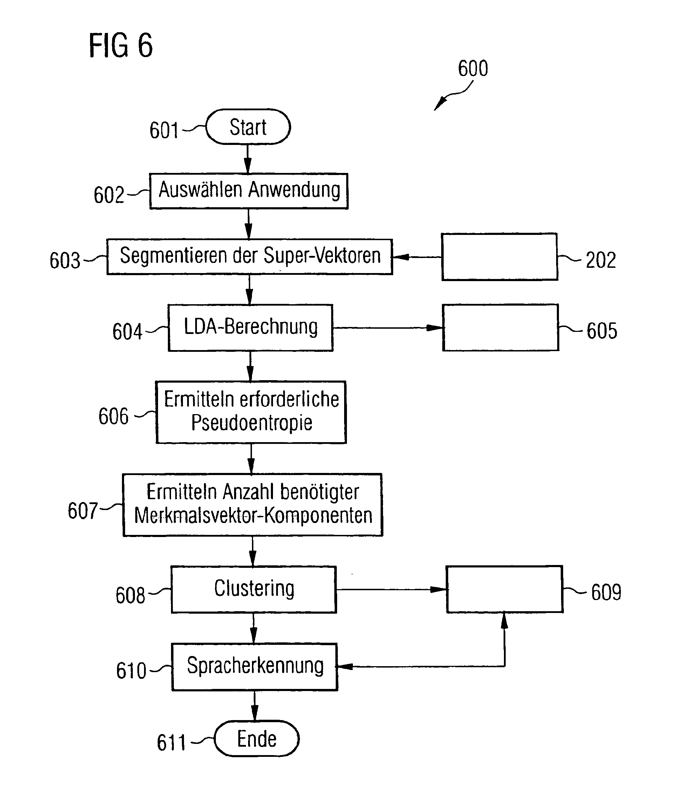

**Fig.6** zeigt in einem Ablaufdiagramm 600 die einzelnen Verfahrensschritte des Verfahrens zur Spracherkennung gemäß dem Ausführungsbeispiel der Erfindung.

Nach Starten des Verfahrens (Schritt 601) wird die Spracherkennungsanwendung ausgewählt oder bestimmt, in deren Rahmen die Spracherkennung durchgeführt werden soll (Schritt 602).

Als mögliche Anwendungen für die Spracherkennung sind gemäß diesem Ausführungsbeispiel folgende Spracherkennungsapplikationen vorgesehen:

- ein Sprachdialogsystem:

  für ein Sprachdialogsystem mit einer Spracherkennungsrate von 92 - 93 % zu gewährleisten;

- ein Fahrzeug-Navigationssystem:

  für diese Spracherkennungsapplikation ist eine Spracherkennungsrate von ungefähr 95 % zu gewährleisten;

- eine Steuerung eines technischen Systems, gemäß dem Ausführungsbeispiel eines Videorekorders:

  für diese Spracherkennungsapplikation ist eine Spracherkennung von ungefähr 95 % zu gewährleisten;

- eine Telefon-Anwendung:

  für diese Anwendung ist eine Spracherkennungsrate von 95 % zu gewährleisten;

- ein Diktat, anders ausgedrückt das Erkennen von Sprachinformation und Umsetzen des erkannten Sprachsignals in ein Textverarbeitungssystem:

  für diese Applikation ist die mit dem Spracherkennungssystem maximal erreichbare Spracherkennungsrate erforderlich, das heißt in diesem Fall ist keine Reduktion von Merkmalsvektor-Komponenten sinnvoll.

Für die jeweilige Spracherkennungsanwendung erfolgt unter einem ebenfalls in dem zweiten Speicherteilbereich 202 gespeicherten, vorzugsweise Spracherkennungsanwendungs-abhängigen Trainingsdatensatz eine Segmentierung der Super-Merkmalsvektoren (Schritt 603) in der gleichen, oben beschriebenen Weise.

Anschließend wird, ebenfalls in der gleichen, oben beschriebenen Weise eine LDA-Berechnung durchgeführt (Schritt 604), womit eine Spracherkennungsanwendungs-abhängige LDA-Matrix 605 ermittelt wird.

Unter Verwendung der Spracherkennungsanwendungs-abhängigen LDA-Matrix 605 wird eine Spracherkennungsanwendungs-abhängige Pseudoentropie-Abbildung ermittelt, die einen Zusammenhang darstellt zwischen der erreichbaren Pseudoentropie und der jeweils berücksichtigten Anzahl von Merkmalsvektor-Komponenten in den Merkmalsvektoren.

Die jeweilige Spracherkennungsanwendungs-abhängige Pseudoentropie-Abbildung wird in dem sechsten Speicherteilbereich 206 gespeichert.

Unter Verwendung der zuvor ermittelten benötigten Spracherkennungsrate und der in dem sechsten Speicherteilbereich 206 gespeicherten Erkennungsraten-Information wird für die ausgewählte Anwendung in einem zusätzlichen Schritt die erforderliche Pseudoentropie ermittelt (Schritt 606).

Unter Verwendung der Spracherkennungsanwendungs-abhängigen Pseudoentropie-Abbildung, wie sie zuvor ermittelt worden ist, wird in einem anschließenden Schritt (Schritt 607) ermittelt, wie viele Merkmalsvektor-Komponenten und welche Merkmalsvektor-Komponenten, gemäß diesem Ausführungsbeispiel die jeweils die Merkmalsvektor-Komponenten mit jeweils kleinstem Informationsgehalt, im Rahmen der Spracherkennung weggelassen werden können, anders ausgedrückt unberücksichtigt bleiben können.

Ist in dem Schritt 607 nunmehr die Anzahl benötigter Merkmalsvektor-Komponenten für die ausgewählte Anwendung ermittelt, so wird in einem nachfolgenden Schritt für die jeweilige Anwendung und für die bestimmte Anzahl von Merkmalsvektor-Komponenten ein Clustering durchgeführt (Schritt 608). Ergebnis des Clusterings ist ein Spracherkennungsanwendungs-abhängiges Codebuch 609, anders ausgedrückt eine Menge Spracherkennungsanwendungs-abhängiger trainierter Hidden Markov Modelle, welches ebenfalls in dem Speicher gespeichert wird. Das Clusterverfahren ist gleich dem oben beschriebenen Clusterverfahren (Schritt 405) zum Bestimmen der Erkennungsraten-Information 500.

Anschließend erfolgt die sprecherunabhängige Spracherkennung unter Verwendung des gespeicherten Spracherkennungsanwendungs-abhängigen Codebuchs 609 (Schritt 610).

Anders ausgedrückt bedeutet dies, dass eine anschließend eingesprochene Äußerung eines Benutzers unter Verwendung der Hidden Markov Modelle gemäß dem [1] beschriebenen Verfahren zur sprecherunabhängigen Spracherkennung unter Verwendung des Viterbi-Algorithmus durchgeführt wird (Schritt 610).

Wie zuvor beschrieben werden im Rahmen der Spracherkennung die reduzierten Merkmalsvektoren berücksichtigt, das heißt die Merkmalsvektoren ohne die nicht berücksichtigten Merkmalsvektor-Komponenten.

Anders ausgedrückt bedeutet dies, dass bei k Merkmalsvektor-Komponenten in einem Merkmalsvektor und bei n nicht berücksichtigten Merkmalsvektor-Komponenten (n < k) lediglich (k - n) Merkmalsvektor-Komponenten im Rahmen der Spracherkennung berücksichtigt werden müssen.

Somit findet auch der Vergleich in einem Vergleichsraum der Dimension (k - n) statt.

Ferner wird erfindungsgemäß die Erkennungsraten-Information nur einmal bestimmt; für jede neue Spracherkennungsanwendung ist es lediglich erforderlich, unter Verwendung der Erkennungsraten-Information 500 zu ermitteln, wie viele und vorzugsweise welche Merkmalsvektor-Komponenten für die neue Spracherkennungsanwendung erforderlich sind, und das Codebuch für die ermittelte Anzahl benötigter Merkmalsvektor-Komponenten zu bestimmen.

Fig.5 zeigt das Beispiel, dass für die ausgewählte Anwendung eine Spracherkennungsrate von 95 % benötigt wird, in Fig.5 dargestellt mittels einer Schnittlinie 504.

Oberhalb der Schnittlinie befindende Datenpunkte repräsentieren eine Pseudoentropie, die größer ist als es eigentlich erforderlich wäre für die Anforderung der ausgewählten Anwendung, anders ausgedrückt, um eine Erkennungsrate von 95 % zu gewährleisten.

Gemäß diesem Ausführungsbeispiel können zwei Merkmalsvektor-Komponenten weggelassen werden, womit die Dimension der verarbeiteten Merkmalsvektoren um den Wert 2 reduziert werden konnte.

Anschaulich kann die Erfindung darin gesehen werden, dass für eine spezielle ausgewählte Spracherkennungsanwendung, beispielsweise aus dem Bereich Command and Control, anders ausgedrückt für eine Steuereinrichtung, unter bestimmten Bedingungen eine geringere Erkennrate des Spracherkenners akzeptiert werden kann und diese Erkenntnis erfindungsgemäß umgesetzt wird in ein Reduzieren der Dimension der verarbeiteten Merkmalsvektoren.

Nach erfolgter Spracherkennung in Schritt 610 wird das Verfahren beendet (Schritt 611).

In diesem Dokument ist folgende Veröffentlichung zitiert:

[1] E.G. Schukat-Talamazzini, Automatischer Spracherkennung, Grundlagen, statistische Modelle und effiziente Algorithmen, Vieweg Verlag, ISBN 3-528-05492-1, Seite 121 - 164, 1995

[2] DE 199 39 101 A1

[3] HAEB-UMBACH R ET AL: "Improvements in connected digit recognition using linear discriminant analysis and mixture densities"STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPECCH, AND SIGNAL PROCESSEING (ICASSP), NEW YORK, IEEE, US, Bd.4,27. April 1993 (1993-04-27), Seiten 239-242, XP010110438.

**EP 1 400 951 B1**

**Patentansprüche**

1. Verfahren zur rechnergestützten Spracherkennung unter Verwendung von Merkmalsvektoren, wobei eine Erkennungsraten-Information gespeichert ist, mit der für die Merkmalsvektoren abhängig von dem Informationsgehalt der Merkmalsvektor-Komponenten angegeben wird, welche Spracherkennungsrate jeweils mit den Merkmalsvektoren mit den jeweils berücksichtigten Merkmalsvektor-Komponenten erzielbar ist,

   • bei dem bestimmt wird (602), welche Spracherkennungsrate für eine Spracherkennungsanwendung benötigt wird,
   • bei dem unter Verwendung der Erkennungsraten-Information ermittelt wird (607), welcher Informationsgehalt der Merkmalsvektor-Komponenten mindestens erforderlich ist, um die bestimmte Spracherkennungsrate zu gewährleisten,
   • bei dem ermittelt wird, wie viele Merkmalsvektor-Komponenten für ein Spracherkennungssystem für die Spracherkennungsanwendung erforderlich sind, um den ermittelten Informationsgehalt bereitzustellen,
   • bei dem die Spracherkennung (610) ausgeführt wird unter Verwendung von Merkmalsvektoren mit der Anzahl von Merkmalsvektor-Komponenten, die erforderlich sind, um den ermittelten Informationsgehalt bereitzustellen.

2. Verfahren gemäß Anspruch 1,
   bei dem für die Spracherkennung ein sprecherunabhängiges Spracherkennungsverfahren verwendet wird.

3. Verfahren gemäß Anspruch 2,
   bei dem die Spracherkennung unter Verwendung von Hidden Markov Modellen durchgeführt wird.

4. Verfahren gemäß einem der Ansprüche 1 bis 3,
   bei dem die Merkmalsvektor-Komponenten mit höchstem Informationsgehalt ausgewählt werden und im Rahmen der Spracherkennung verwendet werden.

5. Spracherkennungssystem mit

   • einer Spracherkennungseinheit,
   • einem mit der Spracherkennungseinheit gekoppelten elektronischen Wörterbuch, in dem die im Rahmen der Spracherkennung berücksichtigten Wörter gespeichert sind,
   • einem Erkennungsraten-Informations-Speicher, in dem Erkennungsraten-Information gespeichert ist, mit der für die Merkmalsvektoren abhängig von dem Informationsgehalt der Merkmalsvektor-Komponenten angegeben wird, welche Spracherkennungsrate jeweils mit den Merkmalsvektoren mit den jeweils berücksichtigten Merkmalsvektor-Komponenten erzielbar ist,
   • einer Erkennungsraten-Informations-Ermittlungseinheit zum Ermitteln der Erkennungsraten-Information,
   • einer Informationsgehalt-Ermittlungseinheit, zum Ermitteln des Informationsgehalts für Merkmalsvektor-Komponenten eines Merkmalsvektors für das Spracherkennungssystem, um zu ermitteln, wie viele Merkmalsvektor-Komponenten erforderlich sind, um den ermittelten Informationsgehalt bereit zustellen,
   • einer Merkmalsvektor-Komponenten-Auswahleinheit zum Auswählen von Merkmalsvektor-Komponenten, die im Rahmen der Spracherkennung unter verwendung von Merkmalsvektoren mit der Anzahl von Merkmalsvektor-komponenten zu berücksichtigen sind, die erforderlich sind, um den ermittelten Informationsgehalt bereitzustellen.

6. Spracherkennungssystem gemäß Anspruch 5,
   bei dem die Spracherkennungseinheit eingerichtet ist zur sprecherunabhängigen Spracherkennung.

7. Spracherkennungssystem gemäß Ansprüche 5 oder 6,
   eingerichtet als ein Embedded System.

8. Steuereinrichtung
   mit einem Spracherkennungssystem gemäß einem der Ansprüche 5 bis 7, zum Steuern eines technischen Systems wobei in dem elektronischen Wörterbuch die zum Steuern des technischen Systems vorgesehenen Steuerbefehle gespeichert sind.

9. Telekommunikationsgerät mit einer Steuereinrichtung gemäß Anspruch 8.

## Claims

1. A method for computer-supported speech recognition using feature vectors, a detection rate information being stored, said detection rate information indicating for the feature vectors as function of the information content of the feature vector components, which speech recognition rate can be respectively achieved with the feature vectors with the feature vector components which are respectively taken into account,

    • in which the speech recognition rate which is required for a speech recognition application is determined (602),
    • in which using the recognition rate information, the information content of the feature vector components which is at least necessary to ensure the specific speech recognition rate is determined (607),
    • in which the number of feature vector components which are necessary for a speech recognition system for the speech recognition application in order to make available the determined information content is determined,
    • in which the speech recognition (610) is carried out using feature vectors with the number of feature vector components which are necessary to make available the determined information content.

2. The method as claimed in claim 1, in which a speaker-independent speech recognition method is used for the speech recognition.

3. The method as claimed in claim 2, in which the speech recognition is carried out using Hidden Markov Models.

4. The method as claimed in one of claims 1 to 3, in which the feature vector components with the largest information content are selected and used within the scope of the speech recognition.

5. A speech recognition system having

    • a speech recognition unit,
    • an electronic dictionary which is connected to the speech recognition unit and in which the words which are taken into account in the framework of the speech recognition are stored,
    • a recognition rate information store in which recognition rate information is stored, said information indicating for the feature vectors, as a function of the information content of the feature vector components, which speech recognition rate can be respectively achieved with the feature vectors with the feature vector components which are respectively taken into account,
    • a recognition rate information-determining unit for determining the recognition rate information,
    • an information content-determining unit for determining the information content for feature vector components of a feature vector for the speech recognition system, to determine the number of feature vector components which are necessary to make available the determined information content,
    • a feature vector component selection unit for selecting feature vector components which are to be taken into account within the framework of the speech recognition using feature vectors with the number of feature vector components, which are necessary to make available the determined information content.

6. The speech recognition system as claimed in claim 5, in which the speech recognition unit is designed for speaker-independent speech recognition.

7. The speech recognition system as claimed in claims 5 or 6, designed as an embedded system.

8. A control device having a speech recognition system as claimed in one of claims 5 to 7 for controlling a technical system, the control instructions which are provided for controlling the technical system being stored in the electronic dictionary.

9. A telecommunications device having a control unit as claimed in claim 8.

## Revendications

1. Procédé de reconnaissance informatisée de la parole en utilisant des vecteurs de caractéristique, dans lequel on mémorise de l'information de taux de reconnaissance, par laquelle il est indiqué pour les vecteurs de caractéristique en fonction de la teneur informative des composantes de vecteurs de caractéristique, le taux de reconnaissance de la parole qui peut être obtenu respectivement avec les vecteurs de caractéristique ayant les composantes de vecteurs de caractéristique prise en compte respectivement

• dans lequel on détermine (602), le taux de reconnaissance de la parole qui est nécessaire pour une application de reconnaissance de la parole,
• dans lequel on détermine (607), en utilisant l'information de taux de reconnaissance, la teneur informative des composantes de vecteurs de caractéristique qui est au moins nécessaire pour assurer le taux déterminé de reconnaissance de la parole,
• dans lequel on détermine le nombre de composantes de vecteurs de caractéristique pour un système de reconnaissance de la parole, qui est nécessaire pour l'application de reconnaissance de la parole afin de mettre à disposition la teneur informative déterminée,
• dans lequel on réalise la reconnaissance de la parole (610) en utilisant des vecteurs de caractéristique ayant le nombre de composantes de vecteurs de caractéristique qui est nécessaire pour disposer de la teneur informative déterminée.

2. Procédé suivant la revendication 1, dans lequel on utilise, pour la reconnaissance de la parole, un procédé de reconnaissance de la parole indépendante du locuteur.

3. Procédé suivant la revendication 2, dans lequel on effectue la reconnaissance de la parole en utilisant des modèles de Markov cachés.

4. Procédé suivant l'une des revendications 1 à 3,
dans lequel on choisit les composantes de vecteurs de caractéristique ayant la teneur informative la plus grande et on les utilise dans le cadre de la reconnaissance de la parole.

5. Système de reconnaissance de la parole comprenant :

• une unité de reconnaissance de la parole,
• un dictionnaire électronique qui est couplé à l'unité de reconnaissance de la parole et dans lequel sont mémorisés les mots pris en compte dans le cadre de la reconnaissance de la parole,
• une mémoire d'information de taux de reconnaissance,

dans laquelle est mémorisée une information de taux de reconnaissance par laquelle il est indiqué, pour le vecteur de caractéristique indépendamment de la teneur informative des composantes de vecteurs de caractéristique, le taux de reconnaissance de la parole qui peut être obtenu respectivement par les vecteurs de caractéristique ayant les composantes de vecteurs de caractéristique respectivement prises en compte,

• une unité de détermination de l'information de taux de reconnaissance pour déterminer l'information de taux de reconnaissance,
• une unité de détermination de la teneur informative pour déterminer des composantes d'un vecteur de caractéristique pour le système (1) de reconnaissance de la parole afin de déterminer le nombre de composantes de vecteurs de caractéristique qui est nécessaire pour disposer de la teneur informative déterminée,
• une unité de sélection de composantes de vecteur de caractéristique pour sélectionner des composantes de vecteurs de caractéristique qui doivent être prises en compte dans le cadre de la reconnaissance de la parole en utilisant des vecteurs de caractéristique ayant le nombre de composante de vecteurs de caractéristique qui est nécessaire pour disposer de la teneur informative déterminée.

6. Système de reconnaissance de la parole suivant la revendication 5, dans lequel l'unité de reconnaissance de la parole est conçue pour une reconnaissance de la parole indépendante du locuteur.

7. Système de reconnaissance de la parole suivant la revendication 5 ou 6, constitué sous la forme d'un système embedded.

8. Dispositif de commande comprenant un système de reconnaissance de la parole suivant l'une des revendications 5 à 7, pour la commande d'un système technique,
dans lequel il est mémorisé dans le dictionnaire électronique des instructions de commande prévues dans la commande du système technique.

9. Appareil de télécommunication ayant un dispositif de commande suivant la revendication 8.

FIG 1

FIG 2

## FIG 3

EP 1 400 951 B1

# FIG 4

400

Start 401

| 402 | Segmentieren der Super-Vektoren | ← | | 202 |

403 — LDA-Berechnung → 304

404 — Auswahl Anzahl Merkmalsvektor-Komponenten

Clustering → 306
405

Bestimmen Erkennungsrate 406

407 — Verfahren beenden?

Anzahl Merkmalsvektor-Komponenten um den Wert "1" reduzieren 409

Ende 408

FIG 5

# FIG 6

600

601 — Start

602 — Auswählen Anwendung

603 — Segmentieren der Super-Vektoren ← ⟶ 202

604 — LDA-Berechnung ⟶ 605

606 — Ermitteln erforderliche Pseudoentropie

607 — Ermitteln Anzahl benötigter Merkmalsvektor-Komponenten

608 — Clustering ⟶ 609

610 — Spracherkennung

611 — Ende

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19939101 A1

### In der Beschreibung aufgeführte Nicht-Patentliteratur

- **E.G. Schukat-Talamazzini.** Automatischer Spracherkennung, Grundlagen, statistische Modelle und effiziente Algorithmen. Vieweg Verlag, 1995, 121-164

- ''Improvements in connected digit recognition using linear discriminant analysis and mixture densities''STATISTICAL SIGNAL AND ARRAY PROCESSING. MINNEAPOLIS. **HAEB-UMBACH R et al.** PROCEEDINGS OF THE INTERNATIONAL CONFERENCE ON ACOUSTICS, SPECCH, AND SIGNAL PROCESSEING (ICASSP). IEEE, 27. April 1933, vol. 4, 239-242